# EUROPÄISCHE PATENTANMELDUNG

(11) **EP 1 683 686 A1**
(43) Veröffentlichungstag der Anmeldung: **26.07.2006**
(21) Anmeldenummer: 06000917.2
(22) Anmeldetag: 17.01.2006
(51) Int. Cl.: B60R 21/16

(54) **Gassack einer Rückhalteeinrichtung**

(30) Priorität: 25.01.2005 DE 202005001182 U
(71) Anmelder: TRW Automotive Safety Systems GmbH, 63743 Aschaffenburg (DE)
(72) Erfinder: Britz, Thomas, Dr., 63856 Bessenbach (DE); Keutz, Markus, 64380 Rossdorf (DE)
(74) Vertreter: Kitzhofer, Thomas

(57) **Zusammenfassung**

Ein Gassack einer Rückhalteeinrichtung hat ein erstes Wandungsteil (14) und ein zweites Wandungsteil (16), wobei das erste Wandungsteil (14) und das zweite Wandungsteil (16) an einem Befestigungsabschnitt (18) mittels einer Klebeverbindung verbunden sind. Zur Verbesserung der Klebeverbindung ist dem Befestigungsabschnitt (18) ein Haftvermittler hinzugefügt.

## Beschreibung

Die Erfindung betrifft einen Gassack einer Rückhalteeinrichtung mit einem ersten Wandungsteil und einem zweiten Wandungsteil, wobei das erste Wandungsteil und das zweite Wandungsteil an einem Befestigungsabschnitt mittels einer Klebeverbindung verbunden sind.

Bekannte Gassäcke von Insassen-Rückhalteeinrichtungen bestehen aus zwei Gewebeabschnitten, wobei die Abschnitte an einem Umfangsrand miteinander verbunden sind. Die Verbindung der beiden Abschnitte kann dabei entweder durch eine Umfangsnaht oder durch Verkleben erfolgen.

Um beim Verkleben von Gassäcken die Haftung des Klebstoffs am Gassack zu verbessern, sind Vorbehandlungsverfahren wie Fluorieren oder Beflammen der Oberfläche bekannt.

Die Erfindung schafft einen Gassack, der mittels einer Klebeverbindung kostengünstig herzustellen ist.

Dies wird dadurch erreicht, daß zur Verbesserung der Klebeverbindung dem Befestigungsabschnitt ein Haftvermittler hinzugefügt ist. Da der Gassack aus einem ersten und einem zweiten Wandungsteil besteht, müssen die beiden Wandungsteile miteinander verbunden werden. Die Verbindung der beiden Wandungsteile erfolgt dabei an dem Befestigungsabschnitt. Um die notwendige Haftung des Klebstoffs an dem Gewebe des Gassacks zu ermöglichen, wird der Haftvermittler eingesetzt, d.h. ein Stoff, der der Verbesserung der Haftfestigkeit miteinander zu kombinierender Werkstoffe dient, so daß eine Klebeverbindung zwischen den beiden Wandungsteilen ermöglicht bzw. verbessert wird. Die Verbindung der beiden Wandungsteile des Gassacks muß beim Aufblasen des Gassacks erheblichen mechanischen Belastungen standhalten. Dies wird durch die Klebeverbindung erreicht, da sie hohen Scherbeanspruchungen widerstehen kann.

Bevorzugt ist der Haftvermittler punktuell vorgesehen. Somit kann der Haftvermittler an den Stellen angebracht sein, an denen er benötigt wird. Die Verbindung der beiden Wandungsteile ist somit kostengünstig. Punktuell bedeutet in diesem Zusammenhang, daß eine kleine Teilfläche vom Haftvermittler eingenommen wird, die von einer anderen Teilfläche beabstandet ist.

Der Befestigungsabschnitt ist vorzugsweise vollflächig mit einer Schicht aus dem Haftvermittler versehen.

Der Gassack besteht aus Fasern, wobei der Haftvermittler bevorzugt in die Fasern des Gassacks integriert ist. Das Integrieren des Haftvermittlers in die Fasern erfolgt vor dem Weben, indem der Haftvermittler direkt zu dem Fasermaterial compoundiert wird. Der mittlere Durchmesser der Haftvermittlerpartikel liegt dafür in einem Bereich von wenigen µm oder darunter. Durch das Integrieren der Haftvermittlerpartikel in die Fasern erfolgt das Hinzufügen des Haftvermittlers bereits in dem gewebeherstellenden Betrieb.

Der Haftvermittler kann auch als Beschichtung aufgebracht sein. Das Gewebe des Gassacks ist dabei aus Fasermaterial gewebt und mit einer dünnen Lage des Haftvermittlers versehen.

Der Haftvermittler besteht z.B. aus Metalloxid. Als Haftvermittler können aber auch Ethylen/Acrylamid-Comonomere, polymere Isocyanate oder reaktiven siliciumorganische Verbindungen, die durch Trocknen oder Polymerisation aushärten, eingesetzt werden.

Gemäß einer Ausführungsform sind die Wandungsteile im Befestigungsabschnitt ausschließlich mittels der Klebeverbindung verbunden. Dadurch kann ein Zusammennähen der Wandungsteile vollkommen entfallen, so daß die beiden Wandungsteile in einem Schritt miteinander verklebt werden können und eine kostengünstige Verbindung hergestellt ist.

Vorzugsweise ist das erste Wandungsteil eine Frontwand und das zweite Wandungsteil eine Rückwand des Gassacks.

Der Befestigungsabschnitt kann am Umfang des Gassacks geschlossen umlaufen. So kann eine Umfangsnaht entfallen, und die Wandungsteile des Gassacks können in einem einzigen Schritt umlaufend miteinander verklebt werden.

Weitere Merkmale und Vorteile der Erfindung ergeben sich aus der nachfolgenden Beschreibung und den Zeichnungen. Die Erfindung wird nachfolgend anhand von bevorzugten Ausführungsformen beschrieben. In den Zeichnungen zeigen:
- Figur 1 eine Ansicht eines erfindungsgemäßen Gassacks einer Rückhalteeinrichtung im unaufgeblasenen, ausgebreiteten Zustand,
- Figur 2 eine perspektivische Ansicht des Gassacks von Figur 1 im aufgeblasenen Zustand,
- Figur 3 eine Schnittansicht des erfindungsgemäßen Gassacks gemäß einer ersten Ausführungsform, und
- Figur 4 einen vergrößerten Ausschnitt des mit X bezeichneten Bereichs in Figur 2 des erfindungsgemäßen Gassacks gemäß einer zweiten Ausführungsform.

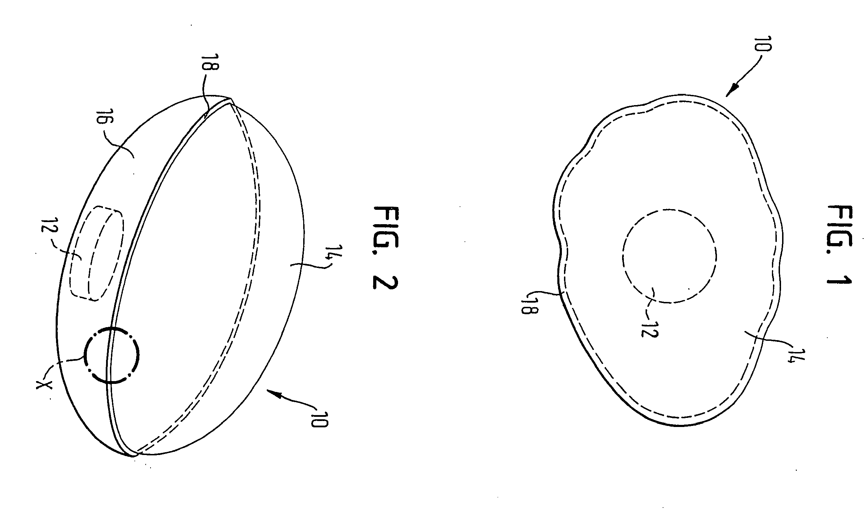

In Figur 1 ist ein Gassack 10 als Teil einer Rückhalteeinrichtung gezeigt. Der Gassack 10 kann Teil eines Fahrer-, Seiten-, Beifahrerairbagmoduls oder ähnlichem sein.

Der Gassack 10 besteht aus einem ersten Wandungsteil 14 und einem zweiten Wandungsteil 16 (siehe insbesondere Figur 2). Das erste Wandungsteil 14 ist hier eine Frontwand des Gassacks 10, während das zweite Wandungsteil 16 eine Rückwand des Gassacks 10 ist. Dabei ist an das zweite Wandungsteil 16 ein schematisch gezeigter Gasgenerator 12 angeschlossen, der Teil der Rückhalteeinrichtung ist. Im nicht aufgeblasenen Zustand des Gassacks 10 liegen die beiden Wandungsteile 14, 16 flächig und eben übereinander (siehe Figur 1).

Die beiden Wandungsteile 14, 16 sind an einem Befestigungsabschnitt 18 miteinander verbunden. Der Befestigungsabschnitt 18 läuft am Rand der Wandungsteile 14, 16 und damit am Umfang des Gassacks 10 geschlossen um. Die Wandungsteile 14, 16 sind mittels einer Klebeverbindung im Befestigungsabschnitt 18 miteinander verbunden, d.h. die Wandungsteile 14, 16 sind randseitig umlaufend verklebt. Es könnte jedoch auch sein, daß Teilbereiche des Befestigungsabschnitts 18 durch eine Naht verbunden sind (nicht gezeigt).

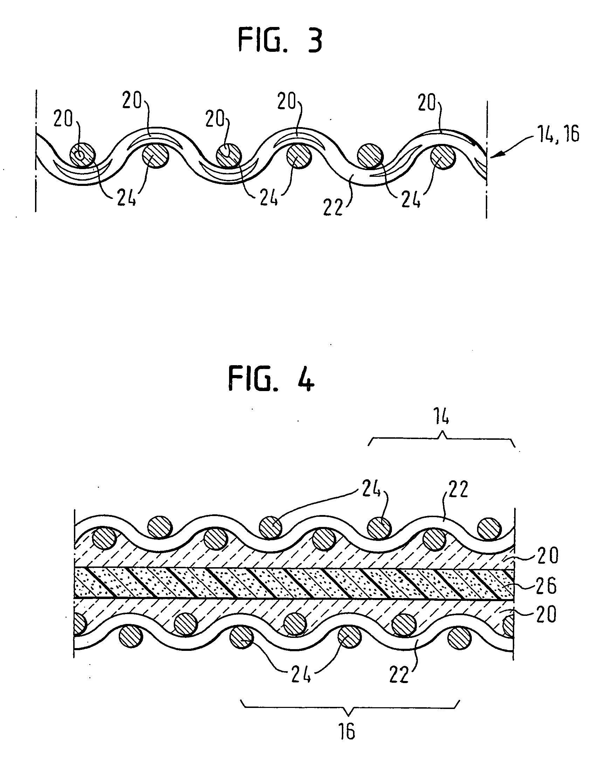

Um die Haftung eines Klebstoffs 26 (siehe Figur 4) am Befestigungsabschnitt 18 des ersten und zweiten Wandungsteils 14, 16 des Gassacks 10 zu verbessern, ist ein Haftvermittler 20 vorgesehen. Unter Haftvermittler 20 versteht man Stoffe, die der Verbesserung der Haftfestigkeit miteinander zu kombinierender Werkstoffe dienen. Als Haftvermittler 20 sind z.B. Metalloxide, Ethylen/Acrylamid-Comonomere, polymere Isocyanate oder reaktive siliciumorganische Verbindungen, die durch Trocknen oder Polymerisation aushärten, vorgesehen.

Der Haftvermittler 20 ist in einer ersten Ausführungsform punktuell angeordnet und in die Fasern des Gassacks 10 integriert. Figur 3 zeigt die Haftvermittler 20 überproportional groß. Gassäcke 10 bestehen bekannterweise aus Kunststoffasern, insbesondere aus Kettfäden 22, die Längsfäden sind, und Schußfäden 24. Um den Haftvermittler 20 in die Fasern des Gassacks 10 zu integrieren, wird der Haftvermittler 20 vor dem Weben des Gassacks zu dem Fasermaterial compoundiert. Die Partikel des Haftvermittlers 20 weisen nur einen Durchmesser von wenigen µm oder darunter auf. Auf dem Befestigungsabschnitt 18 kann dann der Klebstoff (in Figur 3 nicht gezeigt) aufgebracht werden, der auf Grund des Haftvermittlers 20 an dem Gewebe des Gassacks 10 besser haftet.

In Figur 4 ist eine zweite Ausführungsform des Gassacks 10 gezeigt. Das Gewebe des Gassacks 10 ist aus Fasermaterial gewebt und besteht aus den Kett-und Schußfäden 22, 24. Der Befestigungsabschnitt 18 der beiden Wandungsteile 14, 16 wird vollflächig oder punktuell mit einer Schicht aus einem Haftvermittler 20 versehen, d.h. es wird eine dünne Beschichtung aufgebracht. Die Beschichtung des Gewebes des Gassacks 10 ermöglicht dabei, daß die Klebeverbindung der beiden Wandungsteile 14, 16 verbessert wird und der Klebstoff 26 besser an dem Gewebe des Gassacks 10 haftet. Alternativ könnte ein Haftvermittler 20 natürlich auch sowohl in die Fäden 22, 24 integriert und zusätzlich als Schicht vorgesehen sein.

Durch das Hinzufügen des Haftvermittlers 20 wird die Klebeverbindung zwischen dem ersten und zweiten Wandungsteil 14, 16 verbessert. Dabei kann die Klebeverbindung den vorhandenen mechanischen Beanspruchungen beim Aufblasen des Gassacks 10 widerstehen und ein Vernähen der Wandungsteile 14, 16 entfallen.

Um den aufgeblasenen Zustand gemäß Figur 2 herzustellen, wird der Gasgenerator 12 (schematisch gezeigt) von einem nicht gezeigten Aufprallsensor aktiviert und der Gassack 10 aufgeblasen.

## Patentansprüche

1. Gassack einer Rückhalteeinrichtung mit einem ersten Wandungsteil (14) und einem zweiten Wandungsteil (16), wobei das erste Wandungsteil (14) und das zweite Wandungsteil (16) an einem Befestigungsabschnitt (18) mittels einer Klebeverbindung verbunden sind, **dadurch gekennzeichnet, daß** zur Verbesserung der Klebeverbindung dem Befestigungsabschnitt (18) ein Haftvermittler (20) hinzugefügt ist.

2. Gassack nach Anspruch 1, **dadurch gekennzeichnet, daß** der Haftvermittler (20) punktuell vorgesehen ist.

3. Gassack nach Anspruch 1, **dadurch gekennzeichnet, daß** der Befestigungsabschnitt (18) vollflächig mit einer Schicht aus dem Haftvermittler (20) versehen ist.

4. Gassack nach einem der Ansprüche 1 bis 3, **dadurch gekennzeichnet, daß** der Gassack (10) aus Fasern besteht, wobei der Haftvermittler (20) in die Fasern des Gassacks (10) integriert ist.

5. Gassack nach einem der vorhergehenden Ansprüche, **dadurch gekennzeichnet, daß** der Haftvermittler (20) als Beschichtung aufgebrachtist.

6. Gassack nach einem der vorhergehenden Ansprüche, **dadurch gekennzeichnet, daß** der Haftvermittler (20) aus Metalloxid besteht.

7. Gassack nach einem der vorhergehenden Ansprüche, **dadurch gekennzeichnet, daß** die Wandungsteile (14, 16) im Befestigungsabschnitt (18) wenigstens über eine gewisse Strecke ausschließlich mittels der Klebeverbindung verbunden sind.

8. Gassack nach einem der vorhergehenden Ansprüche, **dadurch gekennzeichnet, daß** das erste Wandungsteil (14) eine Frontwand und das zweite Wandungsteil (16) eine Rückwand des Gassacks (10) ist.

9. Gassack nach einem der vorhergehenden Ansprüche, **dadurch gekennzeichnet, daß** der Befestigungsabschnitt (18) am Umfang des Gassacks (10) geschlossen umläuft.
